# FASCICULE DE BREVET EUROPEEN

(11) **EP 0 744 237 B1**
(45) Date de publication et mention de la délivrance du brevet: **23.06.1999**
(21) Numéro de dépôt: 96401046.6
(22) Date de dépôt: 14.05.1996
(51) Int. Cl.: B23K 7/10, F23D 14/60

(54) **Dispositif d'actionnement combiné de deux organes à commande rotative, et chalumeau le comportant**
Vorrichtung zum Zusammenbetätigen von zwei eine rotierende steuerungsenthaltenden Elementen, und Schweissbrenner mit einer solchen Vorrichtung ausgerüstet
Device for controlling together two elements controlled in a rotary way, and nozzle equipped with such a device

(30) Priorité: 24.05.1995 FR 9506232
(43) Date de publication de la demande: 27.11.1996
(73) Titulaire: LA SOUDURE AUTOGENE FRANCAISE, F-75007 Paris (FR)
(72) Inventeur: Cannet, Gilles, 95620 Parmain (FR); Lemesle, Gervais, 95310 Saint Ouen l'Aumone (FR); Pisot, Philippe, 95290 L'Isle Adam (FR)
(74) Mandataire: Le Moenner, Gabriel

(56) Documents cités:
- DE-A- 2 051 330
- DE-C- 830 277
- US-A- 4 949 753

## Description

La présente invention concerne un dispositif d'actionnement combiné de deux organes à commande rotative.

Le document US-A-4 949 753, qui représente l'état de la technique le plus proche, décrit un tel dispositif comportant deux roues de commande associées respectivement aux deux organes à commande rotative, et une troisième roue d'actionnement qui coopère simultanément avec les deux roues de commande, laquelle troisième roue est montée déplaçable en rotation sous l'action de moyens de manoeuvre.

L'invention concerne en outre un chalumeau comportant un tel dispositif.

Les chalumeaux comportent de manière classique deux vannes associées respectivement à une conduite d'alimentation en combustible et à une conduite d'alimentation en comburant. Ces deux gaz sont typiquement l'acétylène et l'oxygène. Chaque vanne est munie d'une poignée de manoeuvre qui permet le réglage du débit de l'un des gaz combustible et comburant. Cet agencement oblige l'opérateur à actionner les poignées l'une après l'autre.

Les deux vannes étant indépendantes, et possédant des organes de manoeuvre distincts, leur manipulation est relativement longue.

Le réglage de la flamme du chalumeau est en outre rendu difficile par le fait que l'opérateur doit régler à la fois le débit total du gaz en sortie du chalumeau et la proportion des gaz combustible et comburant dans le mélange de sortie.

La présente invention a pour but de permettre l'actionnement de deux organes à commande rotative, notamment deux vannes de commande de chalumeaux, à partir d'un dispositif unique manipulable d'une seule main, permettant le réglage combiné et simultané de la proportion de chaque gaz dans le mélange de sortie et du débit total des gaz.

A cet effet, l'invention a pour objet un dispositif d'actionnement combiné de deux organes à commande rotative, caractérisé en ce qu'il comporte deux roues de commande associées respectivement aux deux organes à commande rotative, les deux roues étant montées déplaçables en rotation indépendamment l'une de l'autre autour d'un même axe, et en ce qu'il comporte une troisième roue d'actionnement dont l'axe est concourant à l'axe des deux roues de commande et qui coopère simultanément avec les deux roues de commande, laquelle troisième roue est montée déplaçable en rotation, sous l'action de moyens de manoeuvre, d'une part autour de son propre axe, pour entraîner les deux roues de commande en sens inverses, et d'autre part autour de l'axe de rotation des deux roues de commande suivant un arc de cercle pour entraîner celles-ci dans un même sens.

Suivant des modes particuliers de réalisation, le dispositif d'actionnement peut présenter l'une ou plusieurs des caractéristiques suivantes :
- les roues de commande sont des engrenages coniques,
- les deux roues de commande ont des diamètres sensiblement égaux et l'axe de rotation de la roue d'actionnement est sensiblement perpendiculaire à l'axe de rotation des deux roues de commande,
- chaque roue de commande est fixée à l'extrémité d'un arbre, libre en rotation dans un alésage d'un châssis de support,
- les moyens de manoeuvre de la roue d'actionnement comportent une tige à une extrémité de laquelle est fixée la roue d'actionnement et à l'autre extrémité de laquelle est prévue une poignée de manoeuvre,
- la tige est montée déplaçable suivant un arc de cercle dans une lumière de guidage ménagée dans une paroi cylindrique,
- la tige comporte une butée radiale et il est prévu au moins une rampe disposée le long de la surface balayée par la tige, et adaptée pour coopérer avec la butée pour limiter le débattement angulaire de la roue d'actionnement autour de son axe en fonction de la position angulaire de celle-ci autour de l'axe des roues de commande,
- le dispositif comporte deux rampes disposées de part et d'autre de la tige et ayant des profils différents,
- la butée a une forme sensiblement elliptique,
- les organes à commande rotative sont des vannes de commande de l'écoulement de gaz,
- les sens de commande des vannes sont identiques lorsque les roues de commande sont entraînées dans un même sens;
   L'invention concerne également un chalumeau comportant un dispositif d'actionnement combiné tel que décrit précédemment, adapté pour actionner deux vannes de commande de l'écoulement de deux gaz d'alimentation.

L'invention sera mieux comprise à la lecture de la description qui va suivre, donnée uniquement à titre d'exemple et faite en se référant aux dessins, sur lesquels :
- la Fig.1 est une vue de face, partiellement en coupe, du dispositif d'actionnement selon l'invention;
- la Fig.2 est une vue en coupe suivant la ligne II-II du dispositif de la figure 1; et
- les Fig.3 et 4 sont des vues développées schématiques explicitant le fonctionnement d'une partie du dispositif d'actionnement suivant deux variantes de réalisation de celui-ci.

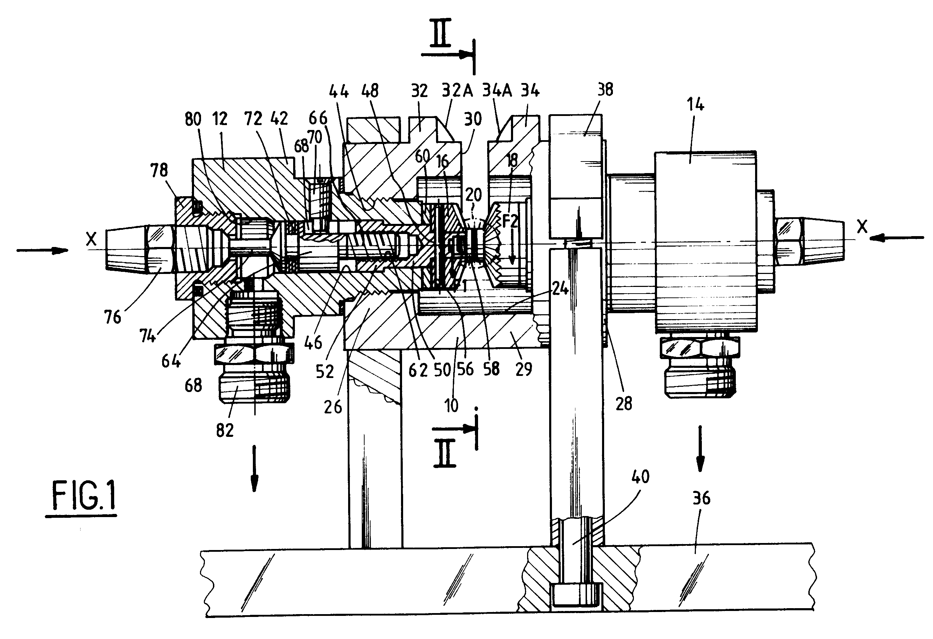

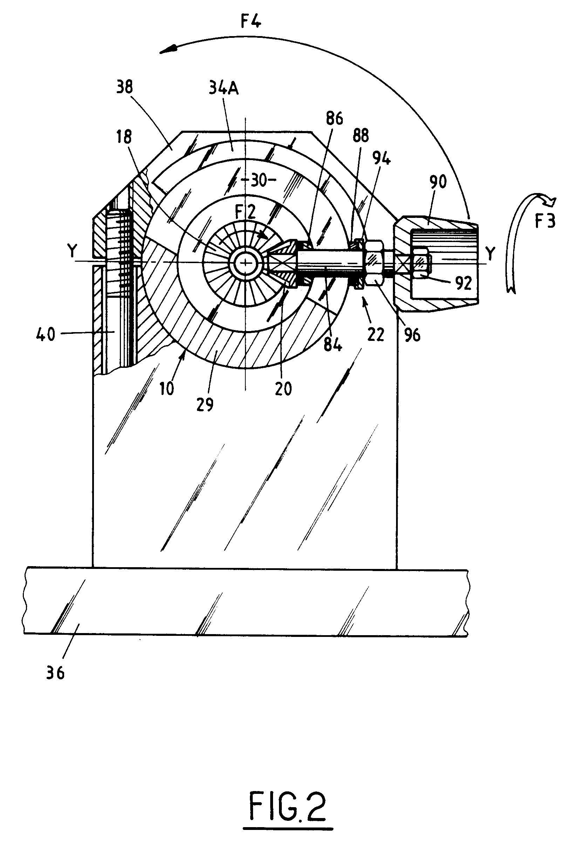

Le dispositif d'actionnement combiné, représenté sur les figures 1 et 2, comporte essentiellement un châssis 10 sur lequel sont fixées deux vannes à commande rotative analogues 12 et 14 disposées en vis à vis suivant un même axe X-X. Ces vannes sont supposées commander l'écoulement de deux gaz d'alimentation d'un chalumeau, non représenté.

Chaque vanne de commande 12,14 comporte une roue de commande 16,18 reçue à l'intérieur du châssis 10 et coopérant avec une roue d'actionnement 20 schématisée sur la figure 1. La roue 20 est associée à des moyens de manoeuvre 22 représentés sur la figure 2.

Le châssis 10 présente une forme générale cylindrique. Il est muni d'une chambre centrale 24 délimitée par deux flasques 26,28 reliés par une paroi latérale cylindrique 29. La chambre centrale 24 est ouverte sur l'extérieur par une lumière 30 de guidage des moyens de manoeuvre 22. Cette lumière 30 est ménagée transversalement dans la paroi cylindrique 29 et s'étend sur 180°.

Deux nervures extérieures 32,34 disposées de part et d'autre de la lumière 30 définissent deux rampes 32A, 34A en arc de cercle disposées en vis à vis le long de la lumière 30.

Le châssis 10 est fixé sur un bâti 36, par exemple d'une installation d'alimentation en gaz du chalumeau par deux colliers 38 munis de vis de fixation 40.

Les vannes 12,14 sont analogues et seule la vanne 12 sera décrite en regard de la figure 1.

Cette dernière comporte un corps de vanne 42 vissé à travers un trou débouchant taraudé 44 d'axe X-X ménagé au centre du flasque 26. Le corps 42 présente un passage axial 46 ayant une extrémité avant 48 de plus faible diamètre débouchant dans la chambre 24.

Un arbre 50, muni à son extrémité arrière d'un rebord périphérique 52, est emmanché dans le conduit 46 et fait saillie par son extrémité avant 48 dans la chambre 24. La roue 16, formée par un engrenage conique, est fixée à l'extrémité avant de l'arbre 50 à l'intérieur de la chambre 24 à l'aide d'une goupille 56 et d'une vis 58. Une rondelle 60 est interposée entre la roue 16 et le corps de vanne 42 afin de faciliter la rotation de la roue 16 par rapport à celui-ci.

Un alésage borgne taraudé 62 débouche à l'extrémité arrière de l'arbre 50. Un coulisseau 64 de forme générale cylindrique est logé à l'intérieur du conduit 46 en arrière de l'arbre 50. L'extrémité avant filetée 66 de celui-ci est reçue à l'intérieur de l'alésage taraudé 62.

Une gorge longitudinale 68 est ménagée dans le corps du coulisseau. Elle reçoit l'extrémité d'un doigt radial 70 solidaire du corps 42 et adapté pour immobiliser en rotation le coulisseau 64. Par ailleurs, ce dernier est muni à son extrémité arrière d'une gorge circulaire dans laquelle est reçu un joint d'étanchéité 72.

A son extrémité arrière, le coulisseau 64 comporte une tige d'actionnement 74 dont l'extrémité arrière coopère avec une valve 76 fixée à l'arrière du conduit 46 par un adaptateur 78.

La valve 76 forme une entrée de la vanne 12, et est adaptée pour régler le passage du gaz vers une chambre de sortie 80 délimitée par le conduit 46, en fonction du déplacement de la tige d'actionnement 74. Cette chambre de sortie 80 est reliée, par un passage radial 82 muni d'un raccord 84, à une conduite d'alimentation du chalumeau non représentée.

Les vannes 12 et 14 sont analogues, et les sens de filetage des extrémités filetées 66 sont adaptés pour que les sens de commande des vannes soient identiques lorsque les roues de commande 16 et 18 sont entraînées dans un même sens. On suppose ici que lorsque les roues 16 et 18 sont entraînées dans le sens des flèches F1 et F2, les vannes 12 et 14 se ferment.

Les moyens de manoeuvre 22 représentés sur la figure 2 comportent une tige d'actionnement 84 traversant la lumière 30 et dont l'axe Y-Y est concourant à l'axe X-X des roues 16 et 18. Elle est maintenue perpendiculairement à l'axe X-X par deux tampons 86 et 88 disposés en appui de part et d'autre de la paroi 29 le long de la lumière 30.

La roue d'actionnement 20 est fixée par tout moyen approprié, une goupille par exemple, à l'extrémité de la tige 84. Elle est formée d'un pignon conique, dont la couronne dentée coopère simultanément avec les couronnes dentées des roues 16 et 18.

A son autre extrémité, la tige 84 comporte une poignée de manoeuvre 90 fixée par un écrou 92.

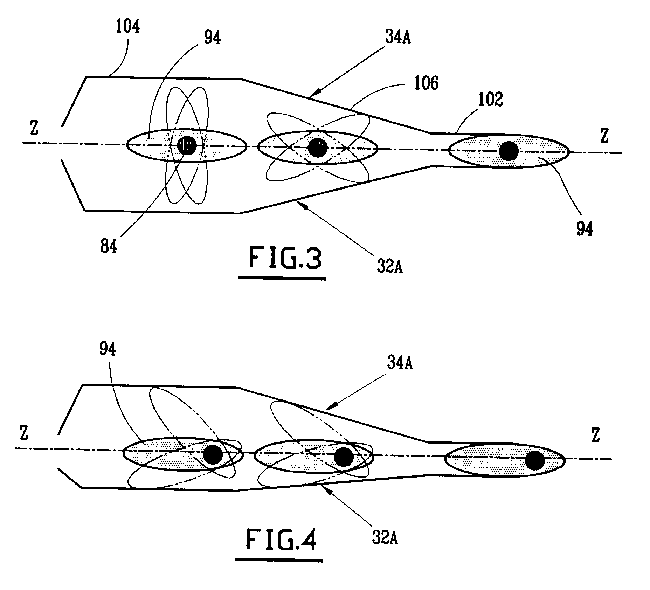

Entre le tampon 88 et la poignée 90, la tige 84 porte une butée 94 de forme générale elliptique perpendiculaire à la tige et solidaire de celle-ci en rotation. Cette butée, qui est adaptée pour coopérer avec les rampes 32A, 34A, est maintenue contre le tampon 88 par un écrou 96. Deux modes de réalisation de la butée 94 et des rampes 32A, 34A seront décrits en détail en regard des figures 3 et 4.

Le dispositif de commande représenté sur la figure 1 est destiné à l'alimentation d'un chalumeau de chauffe. La vanne 12 est associée à une conduite d'alimentation en combustible, alors que la vanne 14 est associée à une conduite d'alimentation en comburant.

On conçoit que le déplacement angulaire de la roue d'actionnement 20 autour de son axe Y-Y dans le sens de la flèche F3, entraîne en rotation la roue 16 dans le sens opposé à celui de la flèche F1 et la roue 18 dans le sens de la flèche F2. La vanne 12 est alors progressivement ouverte alors que la vanne 14 est progressivement fermée.

Ainsi, il est possible, par rotation de la poignée 90 autour de l'axe Y-Y, de modifier la composition du mélange obtenu en sortie du chalumeau par ouverture d'une vanne et fermeture simultanée de l'autre vanne, ceci par exemple en maintenant le débit total de gaz à une valeur sensiblement constante.

Par ailleurs, en déplaçant la poignée 90 dans le sens de la flèche F4 autour de l'axe X-X et suivant la lumière 30, la roue d'actionnement 20 entraîne les roues de commande 16 et 18 dans le même sens, dans le sens opposé aux flèches F1 et F2 sur les figures 1 et 2. Les vannes 12 et 14 sont alors progressivement ouvertes, ce qui accroît le débit total du mélange obtenu en sortie du chalumeau, les proportions en gaz combustible et comburant restant sensiblement inchangées.

Il est ainsi possible de régler le débit total de sortie en positionnant correctement la poignée 90 le long de la lumière de guidage 30.

Sur les figures 3 et 4, est schématisée une vue développée de deux modes de réalisation des rampes 32A, 34A. La tige 84 associée à la butée 94 est représentée dans diverses positions possibles de celles-ci.

Dans le mode de réalisation représenté sur la figure 3, les rampes 32A et 34A sont symétriques par rapport à un axe Z-Z de la lumière 30. Elles délimitent ainsi entre elles un canal s'élargissant d'un tronçon d'extrémité étroit 102 à un tronçon d'extrémité élargi 104, reliés par un tronçon intermédiaire 106 de largeur progressivement croissante. Le tronçon 104 est supposé correspondre aux débits de sortie élevés et le tronçon 102 aux débits faibles.

La butée 94 qui s'étend entre les deux rampes 32A, 34A a une forme allongée sensiblement symétrique, et son contour délimite une ellipse. L'axe de l'arbre 84 passe par le centre de cette ellipse.

Dans ces conditions, on comprend que lorsque la butée 94 est située dans le tronçon 102, le petit axe de l'ellipse est maintenue entre les rampes 32A, 34A, interdisant la rotation de la roue 20 autour de l'axe Y-Y.

Par contre, lorsque la butée 94 est disposée dans le tronçon intermédiaire 106, un débattement angulaire α de la roue 20 est possible autour de l'axe Y-Y avant que la butée 94 ne soit en contact avec l'une des rampes 32A et 34A, comme cela est représenté sur la figure 3.

Lorsque la butée 94 est dans le tronçon 104, la butée 94 est libre de tourner autour de l'axe Y-Y sans entrer en contact avec l'une ou l'autre des rampes 32A, 34A.

Les rampes 32A, 34A limitent ainsi le débattement angulaire de la roue de commande 20 autour de son axe Y-Y en fonction de la position angulaire de celle-ci autour de l'axe X-X. De ce fait, en fonction de la position de la poignée 90 par rapport à la lumière 30, et donc en fonction du débit total de gaz, la largeur de la plage de réglage de la composition du mélange en sortie du chalumeau est plus ou moins étendue.

Tel que représenté sur la figure 3, plus le débit total de gaz est grand, plus la largeur de la plage de réglage de la composition du mélange est grande.

Par ailleurs, la forme des rampes est adaptée pour maintenir la composition du mélange dans une plage acceptable définie par des contraintes de sécurité ou liée au procédé dans lequel le chalumeau est utilisé. De plus, cet agencement, grâce au tronçon 102, permet un préréglage du mélange à l'allumage et à l'extinction du chalumeau, évitant ainsi la production de claquements et de flammèches.

En variante, comme cela est représenté sur la figure 4, il est possible de limiter de façon différenciée l'ouverture ou la fermeture des deux vannes. Dans ce cas, les rampes 32A et 34A sont dissymétriques par rapport à l'axe Z-Z de la lumière 30.

Dans l'exemple représenté, la rampe 32A présente un profil plus aplati que celui de la rampe 34A. Par ailleurs, l'axe Y-Y de la tige 94 est décalé, le long du grand axe de l'ellipse 94, par rapport au centre de celle-ci.

Cet agencement assure une réduction de la plage de réglage potentiel des deux gaz dans des domaines opposés. Ainsi, tel que représenté sur la figure 4, la fermeture de la vanne 12 est plus limitée que celle de la vanne 14, et, inversement, l'ouverture de la vanne 14 est plus limitée que celle de la vanne 12.

On conçoit que bien d'autres profils sont possibles pour les rampes 32A et 34A suivant la plage de compositions que l'on souhaite définir pour le mélange en sortie du chalumeau en fonction du débit total des gaz. Par ailleurs, l'une des deux rampes peut être supprimée. De plus, la butée 94 peut avoir toute autre forme appropriée qu'une forme d'ellipse.

Dans le mode de réalisation représenté, les sens de commande des vannes 12 et 14 sont identiques lorsque les roues de commande sont entraînées dans un même sens. En variante, par inversion du sens de filetage de l'un des coulisseaux, les sens de commande des vannes sont opposés lorsque les roues de commande sont entraînées dans un même sens. Dans ces conditions, le débit total de gaz en sortie du chalumeau est commandé en tournant la poignée 90 autour de son axe Y-Y alors que la composition du mélange en sortie est commandée par déplacement de cette même poignée le long de la lumière 30.

De plus, il est possible d'utiliser des vannes dont l'ouverture dépend de la position angulaire de la roue de commande associée suivant une loi prédéterminée, non linéaire. Une telle vanne peut être obtenue par utilisation d'un pointeau coulissant assujetti à une surface de came liée à la roue de commande et dont le profil correspond à la loi de commande d'ouverture souhaitée.

Suivant une autre variante, les roues de commande peuvent avoir des nombres de dents différents sur leur surface d'entraînement et des diamètres différents. Dans ce cas, l'axe Y-Y de rotation de la roue d'actionnement n'est plus orthogonal à l'axe X-X des roues de commande, mais il reste concourant à celui-ci.

## Revendications

1. Dispositif d'actionnement combiné de deux organes (10,12) à commande rotative, comportant deux roues (16,18) de commande associées respectivement aux deux organes (10,12) à commande rotative, les deux roues étant montées déplaçables en rotation indépendamment l'une de l'autre autour d'un même axe (X-X), et une troisième roue d'actionnement (20) dont l'axe est concourant à l'axe (X-X) des deux roues de commande (16,18) et qui coopère simultanément avec les deux roues de commande (16,18), laquelle troisième roue (20) est montée déplaçable en rotation, sous l'action de moyens de manoeuvre (22), d'une part autour de son propre axe (Y-Y), pour entraîner les deux roues de commande (16,18) en sens inverses, et d'autre part autour de l'axe de rotation (X-X) des deux roues de commande (16,18) suivant un arc de cercle pour entraîner celles-ci dans un même sens.

2. Dispositif selon la revendication 1, caractérisé en ce que les roues de commande (16,18) sont des engrenages coniques.

3. Dispositif selon la revendication 1 ou 2, caractérisé en ce que les deux roues de commande (16,18) ont des diamètres sensiblement égaux et l'axe de rotation (Y-Y) de la roue d'actionnement (20) est sensiblement perpendiculaire à l'axe (X-X) de rotation des deux roues de commande (16,18).

4. Dispositif selon l'une quelconque des revendications précédentes, caractérisé en ce que chaque roue de commande (16,18) est fixée à l'extrémité d'un arbre (50), libre en rotation dans un alésage (48) d'un châssis de support (10).

5. Dispositif selon l'une quelconque des revendications précédentes, caractérisé en ce que les moyens de manoeuvre (22) de la roue d'actionnement (20) comportent une tige (84) à une extrémité de laquelle est fixée la roue d'actionnement (20) et à l'autre extrémité de laquelle est prévue une poignée de manoeuvre (90).

6. Dispositif selon la revendication 5, caractérisé en ce que la tige (84) est montée déplaçable suivant un arc de cercle dans une lumière de guidage (30) ménagée dans une paroi cylindrique (29).

7. Dispositif selon la revendication 5 ou 6, caractérisé en ce que la tige (84) comporte une butée radiale (94) et en ce qu'il est prévu au moins une rampe (32A, 34A) disposée le long de la surface balayée par la tige (84), et adaptée pour coopérer avec la butée (94) pour limiter le débattement angulaire de la roue d'actionnement (20) autour de son axe (Y-Y) en fonction de la position angulaire de celle-ci autour de l'axe (X-X) des roues de commande (16,18).

8. Dispositif selon la revendication 7, caractérisé en ce qu'il comporte deux rampes (32A, 34A) disposées de part et d'autre de la tige (84) et ayant des profils différents.

9. Dispositif selon la revendication 7 ou 8, caractérisé en ce que la butée (94) a une forme sensiblement elliptique.

10. Dispositif selon l'une quelconque des revendications précédentes, caractérisé en ce que les organes à commande rotative sont des vannes (12,14) de commande de l'écoulement de gaz.

11. Dispositif selon la revendication 10, caractérisé en ce que les sens de commande des vannes (10,12) sont identiques lorsque les roues de commande (16,18) sont entraînées dans un même sens.

12. Chalumeau comportant un dispositif d'actionnement combiné de deux vannes (12,14) de commande de l'écoulement de deux gaz d'alimentation selon la revendication 10 ou 11.

## Claims

1. Device for the combined activation of two elements (10, 12) with rotary control, the said device having two control wheels (16, 18) respectively associated with the two elements (10, 12) with rotary control, the two wheels being mounted so as to be displaceable in rotation, independently of one another, about the same axis (X-X), and a third activating wheel (20), the axis of which is convergent with the axis (X-X) of the two control wheels (16, 18) and which simultaneously interacts with the said two control wheels (16, 18), which third wheel (20) is mounted so as to be displaceable in rotation, under the action of manoeuvring means (22), on the one hand about its own axis (Y-Y) in order to drive the two control wheels (16, 18) in opposite directions, and on the other hand about the axis of rotation (X-X) of the two control wheels (16, 18) along a circular arc in order to drive the said control wheels in the same direction.

2. Device according to claim 1, characterised in that the control wheels (16, 18) are bevel gears.

3. Device according to claim 1 or 2, characterised in that the two control wheels (16, 18) have substantially equal diameters and the axis of rotation (Y-Y) of the activating wheel (20) is substantially perpendicular to the axis (X-X) of rotation of the two control wheels (16, 18).

4. Device according to any one of the preceding claims, characterised in that each control wheel (16, 18) is fixed to the end of a shaft (50) which is free to rotate in a bore (48) in a supporting frame (10).

5. Device according to any one of the preceding claims, characterised in that the means (22) for manoeuvring the activating wheel (20) have a rod (84), to one end of which the activating wheel (20) is fixed and on the other end of which a manoeuvring handle (90) is provided.

6. Device according to claim 5, characterised in that the rod (84) is mounted so as to be displaceable along a circular arc in a guiding opening (30) arranged in a cylindrical wall (29).

7. Device according to claim 5 or 6, characterised in that the rod (84) has a radial stop (94) and in that there is provided at least one ramp (32A, 34A) which is disposed along the surface swept by the rod (84) and is adapted to interact with the stop (94) in order to limit the angular clearance of the activating wheel (20) about its axis (Y-Y) in accordance with the angular position of the said wheel about the axis (X-X) of the control wheels (16, 18).

8. Device according to claim 7, characterised in that it has two ramps (32A, 34A) disposed on either side of the rod (84) and having different profiles.

9. Device according to claim 7 or 8, characterised in that the stop (94) has a substantially elliptical shape.

10. Device according to any one of the preceding claims, characterised in that the elements with rotary control are gas flow control valves (12, 14).

11. Device according to claim 10, characterised in that the directions of control of the valves (10, 12) are identical when the control wheels (16, 18) are driven in the same direction.

12. Blowtorch having a device for the combined activation of two valves (12, 14) for controlling the flow of two supply gases, in accordance with claim 10 or 11.

## Patentansprüche

1. Vorrichtung zur kombinierten Verstellung von zwei drehbetätigbaren Mitteln (10, 12), umfassend zwei Betätigungsräder (16, 18), die jeweils mit dem entsprechenden drehbetätigbaren Mittel (10, 12) verbunden und voneinander unabhängig drehbar auf derselben Achse (X-X) angeordnet sind, und ein drittes Betätigungsrad (20), dessen Achse sich mit der Achse (X-X) der zwei Betätigungsräder (16, 18) kreuzt und das gleichzeitig auf beide Betätigungsräder (16, 18) einwirkt, welches dritte Rad (20) über Bedienungsmittel (22) einerseits zum gegensinnigen Antrieb der zwei Betätigungsräder (16, 18) um seine eigene Achse (Y-Y) und andererseits entlang eines Kreisbogens um die Drehachse (X-X) der zwei Betätigungsräder (16, 18) drehbar ist, um letztere gleichsinnig anzutreiben.

2. Vorrichtung nach Anspruch 1, dadurch gekennzeichnet, daß die Betätigungsräder (16, 18) Kegelräder sind.

3. Vorrichtung nach Anspruch 1 oder 2, dadurch gekennzeichnet, daß die zwei Betätigungsräder (16, 18) etwa gleiche Durchmesser haben und die Drehachse (Y-Y) des dritten Betätigungsrades (20) ungefähr rechtwinklig zur Drehachse (X-X) der zwei Betätigungsräder (16, 18) steht.

4. Vorrichtung nach einem der vorstehenden Ansprüche, dadurch gekennzeichnet, daß jedes Betätigungsrad (16, 18) am Ende einer Welle (50) sitzt, die in einer Bohrung (48) eines Gestells (10) frei drehbar ist.

5. Vorrichtung nach einem der vorstehenden Ansprüche, dadurch gekennzeichnet, daß die Bedienungsmittel (22) des dritten Betätigungsrades (20) eine Stange (84) umfassen, an deren einem Ende dieses Betätigungsrad (20) sitzt und an deren anderem Ende sich ein Bedienungsgriff (90) befindet.

6. Vorrichtung nach Anspruch 5, dadurch gekennzeichnet, daß die Stange (84) in einem in einer zylindrischen Wand (29) ausgesparten Führungsschlitz (30) entlang eines Kreisbogens verschwenkbar angeordnet ist.

7. Vorrichtung nach Anspruch 5 oder 6, dadurch gekennzeichnet, daß die Stange (84) einen radialen Anschlag (94) aufweist und daß sie mit mindestens einer Führungsbahn (32A, 34A) versehen ist, die entlang der von der Stange (84) bestrichenen Fläche angeordnet ist und mit dem Anschlag (94) zusammenwirkt, so daß der Winkelversatz des dritten Betätigungsrades (20) um seine Achse (Y-Y) in Abhängigkeit von der Winkelstellung derselben bezüglich der Achse (X-X) der Betätigungsräder (16, 18) begrenzt ist.

8. Vorrichtung nach Anspruch 7, dadurch gekennzeichnet, daß sie zwei Führungsbahnen (32A, 34A) umfaßt, die beidseits der Stange (84) angeordnet sind und unterschiedliche Profile haben.

9. Vorrichtung nach Anspruch 7 oder 8, dadurch gekennzeichnet, daß der Anschlag (94) eine etwa elliptische Form hat.

10. Vorrichtung nach einem der vorstehenden Ansprüche, dadurch gekennzeichnet, daß die drehbetätigbaren Mittel Steuerventile (12, 14) zur Abgabe von Gas sind.

11. Vorrichtung nach Anspruch 10, dadurch gekennzeichnet, daß die Steuerrichtung der Ventile (10, 12) identisch ist, wenn die Betätigungsräder (16, 18) gleichsinnig angetrieben werden.

12. Schweißbrenner, umfassend eine Vorrichtung zur kombinierten Verstellung von zwei Steuerventilen (12, 14) zur Abgabe von zwei Versorgungsgasen nach Anspruch 10 oder 11.
